# EUROPEAN PATENT APPLICATION

(11) **EP 4 257 358 A1**
(43) Date of publication of application: **11.10.2023**
(21) Application number: 21900688.9
(22) Date of filing: 02.12.2021
(51) Int. Cl.: B32B 27/32, H01M 10/0562, H01M 10/0585

(54) **PROCESS FILM FOR USE IN MANUFACTURE OF ALL-SOLID-STATE BATTERY AND METHOD FOR MANUFACTURING ALL-SOLID-STATE BATTERY**

(30) Priority: 02.12.2020 JP 2020200574
(71) Applicant: DAI NIPPON PRINTING CO., LTD., Tokyo 162-8001 (JP)
(72) Inventor: SASAKI, Miho, Tokyo 162-8001 (JP)
(74) Representative: Müller-Boré & Partner Patentanwälte PartG mbB
(86) International application number: PCT/JP2021/044365
(87) International publication number: WO 2022/118938

(57) **Abstract**

Provided is a novel process film for use in a process for pressurizing an all-solid-state battery element in manufacture of an all-solid-state battery. This process film for use in a process for pressurizing an all solid-state battery element in manufacture of an all solid-state battery is used in an application in which the process film pressurizes the all-solid-state battery element while covering the all-solid-state battery element, and then is removed from the all-solid-state battery element. The process film comprises a laminate including at least a base material layer and a heat sealable resin layer in the stated order from the outside.

## Description

### TECHNICAL FIELD

The present disclosure relates to a process film that is used for manufacturing an all-solid-state battery, and a method for manufacturing an all-solid-state battery.

### BACKGROUND ART

Various types of electrical storage devices have been heretofore developed, and for example, lithium ion batteries are used in a wide range of fields.

In every electrical storage device, a packaging material (exterior material) is an essential member for sealing electrical storage device elements such as an electrode and an electrolyte, and for example, a lithium ion battery has an electrolytic solution sealed by an exterior material.

An electrical storage device containing an electrolytic solution like a lithium ion battery cannot be used in an environment at a temperature equal to or higher than the boiling point of the electrolytic solution. On the other hand, an all-solid-state battery having a solid electrolyte as an electrolyte is known. The all-solid-state battery has the advantages of high safety and a wide operating temperature range because an organic solvent is not used in the battery.

On the other hand, it is known that the all-solid-state battery is likely to be delaminated between a solid electrolyte and a negative active material layer or a positive active material layer by expansion/shrinkage of a negative electrode or a positive electrode due to charge-discharge, so that deterioration of the battery is likely to proceed.

As a method for suppressing delamination between a solid electrolyte and a negative active material layer or a positive active material layer, a technique is known in which an all-solid-state battery is constrained in a state of being pressed at a high pressure. For example, Patent Document 1 discloses a method for manufacturing a battery, including a lamination step of preparing a laminate including a positive electrode current collector, a positive electrode layer, an electrolyte layer, a negative electrode layer and a negative electrode current collector in this order, a pressurization step of pressurizing the laminate prepared in the laminating step in a laminating direction, and a constraining step of constraining the laminate while pressurizing the laminate in the laminating direction at a pressure of 0.1 MPa or more and 100 MPa or less for a predetermined time after the pressurization step.

### PRIOR ART DOCUMENT

### PATENT DOCUMENT

Patent Document 1: Japanese Patent Laid-open Publication No. 2012-142228
Patent Document 2: Japanese Patent Laid-open Publication No. 2008-103288

### SUMMARY OF THE INVENTION

### PROBLEMS TO BE SOLVED BY THE INVENTION

As described above, a technique is known in which an all-solid-state battery is constrained in a state of being pressed at a high pressure is known as a method for suppressing delamination between a solid electrolyte and a negative active material layer or a positive active material layer. However, if an all-solid-state battery sealed with a packaging material is pressed at a high pressure, the packaging material may be thinned, resulting in deterioration of the insulation quality and the water vapor barrier properties of the all-solid-state battery.

As a method for eliminating such a risk, a method is conceivable in which an all-solid-state battery element including a solid electrolyte, a negative active material layer, a positive active material layer and the like is pressurized before sealing with a packaging material to enhance adhesion between the solid electrolyte and the negative active material layer or the positive active material layer. It is also expected that enhancement of the adhesion improves the initial performance of the all-solid-state battery. It is also expected that heating during pressurization improves the initial performance of the all-solid-state battery.

However, as a result of conducting studies, the inventor of the present disclosure has found a new problem that if an all-solid-state battery element is pressurized by a pressurizing apparatus, a solid electrolyte, a negative active material layer, a positive active material layer and the like fall off and stick to electrodes and the pressurizing apparatus. Such a falling object may cause a short-circuit by sticking to an electrode, or may raise the need for interruption of a pressurization step for cleaning by sticking to a pressurizing apparatus, resulting in a significant decrease in efficiency of production of the all-solid-state battery.

Under these circumstances, a main object of the present disclosure is to provide a novel process film for use in a step of pressurizing an all-solid-state battery element in manufacture of an all-solid-state battery.

### MEANS FOR SOLVING THE PROBLEM

The inventor of the present disclosure has extensively conducted studies for achieving the above-described object. As a result, the inventor has found that a process film including a laminate including at least a base material layer and a heat-sealable resin layer in this order from the outside is suitably used for an application in which an all-solid-state battery element is pressurized with the all-solid-state battery element covered with the process film, and the process film is then peeled from the all-solid-state battery element, in manufacture of an all-solid-state battery.

The present disclosure has been completed by further conducting studies based on the above-mentioned findings. That is, the present disclosure provides an invention of an aspect as described below.

A process film for use in a step of pressurizing an all-solid-state battery element in manufacture of an all-solid-state battery,
the process film being used for an application in which the all-solid-state battery element is pressurized with the all-solid-state battery element covered with the process film, and the process film is then peeled from the all-solid-state battery element,
the process film including a laminate including at least a base material layer and a heat-sealable resin layer in this order from the outside.

### ADVANTAGES OF THE INVENTION

According to the present disclosure, it is possible to provide a novel process film for use in a step of pressurizing an all-solid-state battery element in manufacture of an all-solid-state battery. According to the present disclosure, it is also possible to provide a method for manufacturing an all-solid-state battery.

### BRIEF DESCRIPTION OF THE DRAWINGS

Fig. 1 is an example of a schematic sectional view showing a state in which an all-solid-state battery element is covered using a process film of the present disclosure.
Fig. 2 is an example of a schematic sectional view showing a state in which an all-solid-state battery element is covered using a process film of the present disclosure.
Fig. 3 is an example of a schematic plan view showing a state in which an all-solid-state battery element is covered using a process film of the present disclosure.
Fig. 4 is a schematic sectional view showing an example of a laminated structure of a process film of the present disclosure.
Fig. 5 is a schematic sectional view showing an example of a laminated structure of a process film of the present disclosure.
Fig. 6 is a schematic sectional view showing an example of a laminated structure of a process film of the present disclosure.
Fig. 7 is a schematic sectional view showing an example of a laminated structure of a process film of the present disclosure.
Fig. 8 is a schematic sectional view showing an example of a laminated structure of a process film of the present disclosure.
Fig. 9 is an example of a schematic plan view showing a state in which an all-solid-state battery element is covered with a process film of the present disclosure (not molded).
Fig. 10 is an example of a schematic plan view showing a state in which an all-solid-state battery element is covered with a process film of the present disclosure (not molded).
Fig. 11 is an example of a schematic plan view showing a state in which an all-solid-state battery element is covered with a process film of the present disclosure (not molded).
Fig. 12 is a schematic diagram for illustrating a pressure resistance test method.
Fig. 13 is a schematic diagram for illustrating a method for evaluation on sticking of a falling object to a pressurizing apparatus due to pressurization of an all-solid-state battery element.

### EMBODIMENTS OF THE INVENTION

The process film of the present disclosure is a process film for use in a step of pressurizing an all solid-state battery element in manufacture of an all-solid-state battery, the process film is used for an application in which the all-solid-state battery element is pressurized with the all-solid-state battery element covered with the process film, and the process film is then peeled from the all-solid-state battery element, and the process film includes a laminate including at least a base material layer and a heat-sealable resin layer in this order from the outside. With such a configuration, the process film of the present disclosure is suitably used in a step of pressurizing an all-solid-state battery element in manufacture of an all-solid-state battery. Specifically, in the step of pressurizing an all-solid-state battery element, a situation can be suitably suppressed in which a falling object generated by pressurization of the all-solid-state battery element sticks to electrodes and a pressurizing member.

Hereinafter, the process film of the present disclosure will be described in detail. In this specification, a numerical range indicated by the term "A to B" means "A or more" and "B or less". For example, the expression of "2 to 15 mm" means 2 mm or more and 15 mm or less.

### 1. Laminated structure and physical properties of process film

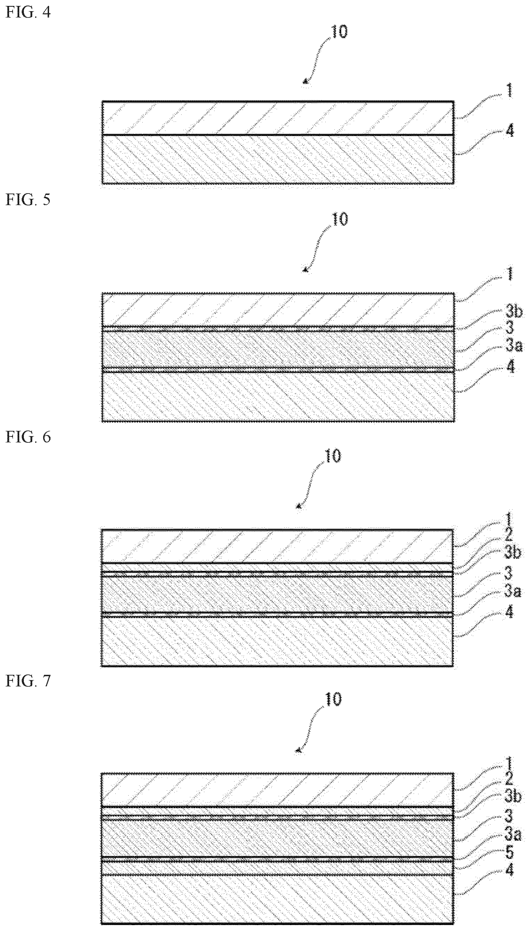

As shown in, for example, Figs. 4 to 8, a process film 10 of the present disclosure includes a laminate including at least a base material layer 1 and a heat-sealable resin layer 4 in this order from the outside. In the process film 10, the base material layer 1 is on the outer layer side, and the heat-sealable resin layer 4 is on the inner layer side. In construction of an all-solid-state battery using the process film 10 and a battery element, the all-solid-state battery element is housed in a space formed by heat-sealing the peripheral edge portions of the heat-sealable resin layers 4 of the process film 10 with the heat-sealable resin layers 4 facing each other.

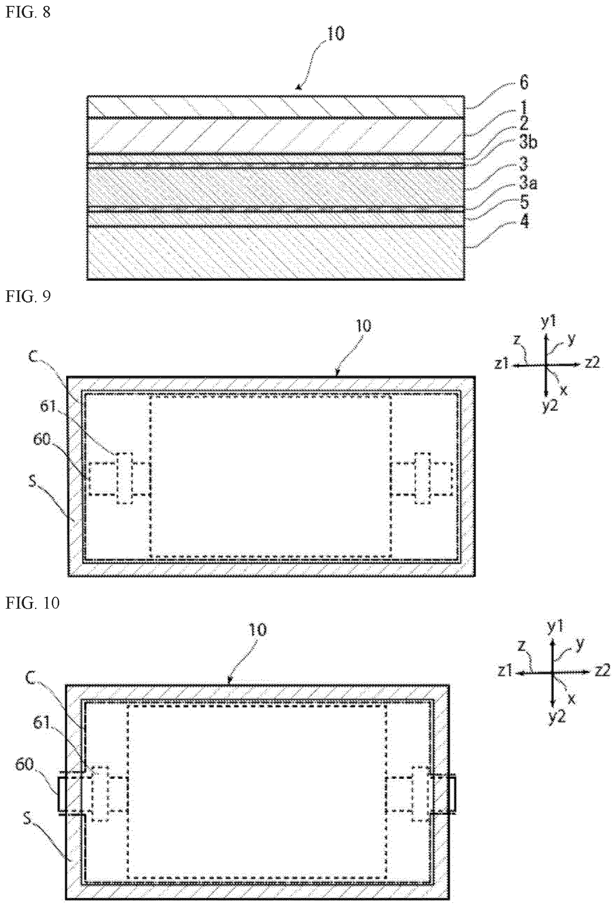

As shown in Fig. 4, the process film 10 may be a laminate of only the base material layer 1 and the heat-sealable resin layer 4. As shown in Figs. 5 to 8, a water vapor barrier layer 3 may be provided between the base material layer 1 and the heat-sealable resin layer 4. In addition, it is preferable that a protective film is provided on a surface of the water vapor barrier layer 3, and Figs. 5 to 8 show a configuration in which a water vapor barrier layer protective film 3b is provided on a surface of the water vapor barrier layer 3 on the base material layer 1 side, and a water vapor barrier layer protective film 3a is provided on a surface of the water vapor barrier layer 3 on the heat-sealable resin layer 4 side. As shown in Fig. 6, an adhesive agent layer 2 may be present between the base material layer 1 and the water vapor barrier layer 3 if necessary for the purpose of, for example, improving bondability between these layers. As shown in Fig. 7, an adhesive layer 5 may be present between the water vapor barrier layer 3 and the heat-sealable resin layer 4 if necessary for the purpose of, for example, improving bondability between these layers. Further, the process film may include a buffer layer 6 if necessary, and as shown in Fig. 8, the buffer layer 6 can be suitably provided on, for example, the outer side of the base material layer 1 (on a side opposite to the heat-sealable resin layer 4 side). Here, the buffer layer 6 may be bonded to the base material layer 1 to form a part of the process film 10, or may be provided as a member different from the process film 10, and used together with the process film 10 in pressurization of the all-solid-state battery element.

The thickness of the laminate forming the process film 10 is not particularly limited, and is preferably about 10,000 µm or less, about 8,000 µm or less, about 5,000 µm or less, or about 100 µm or less, and preferably about 5 µm or more, about 25 µm or more, about 100 µm or more, about 150 µm or more, or about 200 µm or more from the viewpoint of suitably exhibiting the function of the process film 10, i.e. a function of protecting the all-solid-state battery element in pressurization. The thickness of the laminate is preferably in the range of, for example, about 5 to 10,000 µm, about 5 to 8,000 µm, about 5 to 5,000 µm, about 25 to 10,000 µm, about 25 to 8,000 µm, about 25 to 5,000 µm, about 100 to 10,000 µm, about 100 to 8,000 µm, about 100 to 5,000 µm, about 150 to 10,000 µm, about 150 to 8,000 µm, about 150 to 5,000 µm, about 200 to 10,000 µm, about 200 to 8,000 µm, about 200 to 5,000 µm, about 5 to 100 µm, or about 25 to 200 µm, particularly preferably in the range or 25 to 5,000 µm.

In manufacture of the all-solid-state battery, the step of pressurizing an all-solid-state battery element is generally carried out in a dry room, and may be carried out in the air. The water-vapor transmission rate of the process film 10 is preferably small from the viewpoint of inhibiting the all-solid-state battery element from absorbing moisture when pressurization is performed in the air. From such a viewpoint, the water-vapor transmission rate of the process film 10 left to stand in an environment at 40°C and 100% RH for 48 hours is preferably 10 cc/m²/day or less, more preferably 5 cc/m²/day or less, still more preferably 2 cc/m²/day or less, still more preferably 0 cc/m²/day. The method for measuring the water-vapor transmission rate of the process film 10 is as follows.

### <Water-vapor transmission rate>

In accordance with the provision of JIS K 7129: 2008 (Annex B) (measurement conditions such as a test sample size and a measurement time are the same as those in the provision), the water-vapor transmission rate (cc/m²/day) is measured under the condition of 40°C and 100% RH using a commercially available measuring apparatus (for example, MOCON PERMATRAN-W 3/33 manufactured by MOCON, Inc.).

### 2. Layers forming process film

The process film 10 of the present disclosure includes a laminate including at least the base material layer 1 and the heat-sealable resin layer 4 in this order from the outside. Hereinafter, the layers forming the process film 10 of the present disclosure will be described in detail.

### [Base Material Layer 1]

In the present disclosure, the base material layer 1 is a layer provided for the purpose of, for example, performing functions as a protective member and a base material of the process film 10. The base material layer 1 is located on the outer layer side of the process film 10.

The material that forms the base material layer 1 is not particularly limited as long as it has functions as a protective member and a base material. The base material layer 1 can be formed using, for example, a resin, and the resin may contain additives described later. As described later, the base material layer 1 may form the buffer layer 6, and here, a material for forming the buffer layer 6 described later is used as a material for forming the base material layer 1.

For formation of the base material layer 1, for example, a resin film formed of a resin may be used, or a resin may be applied to obtain a resin film in formation of the base material layer 1. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 1 include resins such as polyester, polyamide, polyolefin, epoxy resin, acrylic resin, fluororesin, polyurethane, silicone resin and phenol resin, and modified products of these resins. The resin that forms the base material layer 1 may be a copolymer of these resins or a modified product of the copolymer. Further, a mixture of these resins may be used.

Of these resins, polyester and polyamide are preferable as resins that form the base material layer 1.

Specific examples of the polyester include polyethylene terephthalate, polybutylene terephthalate, polyethylene naphthalate, polybutylene naphthalate, polyethylene isophthalate, and copolyesters. Of these, polyethylene terephthalate is preferable. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 61, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 1 contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, even more preferably at least one of a biaxially stretched polyethylene terephthalate film, a biaxially stretched polybutylene terephthalate film, a biaxially stretched nylon film, and a biaxially stretched polypropylene film. Since nylon has good elongation against pressurization, it is preferable that the base material layer 1 contains nylon from the viewpoint of enhancing the durability of the process film 10 against pressurization. On the other hand, from the viewpoint of more suitably suppressing ingress of moisture into a packaging, it is preferable that the base material layer 1 contains biaxially stretched polyethylene terephthalate.

The base material layer 1 may be a single layer, or may include two or more layers. When the base material layer 1 includes two or more layers, the base material layer 1 may be a laminate obtained by laminating resin films with an adhesive or the like, or a resin film laminate obtained by co-extruding resins to form two or more layers. The resin film laminate obtained by co-extruding resins to form two or more layers may be used as the base material layer 1 in an unstretched state, or may be uniaxially stretched or biaxially stretched and used as the base material layer 1. When the base material layer 1 is a single layer, it is preferable that the base material layer 1 is composed of a single layer of polyester (particularly polyethylene terephthalate).

Specific examples of the resin film laminate with two or more layers in the base material layer 1 include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 1 is a resin film laminate with two layers, the base material layer 1 is preferably a laminate of a polyester film and a polyester film, a laminate of a polyamide resin film and a polyamide resin film, or a laminate of a polyester film and a polyamide resin film, more preferably a laminate of a polyethylene terephthalate film and a polyethylene terephthalate film, a laminate of a nylon film and a nylon film, or a laminate of a polyethylene terephthalate film and a nylon film.

When the base material layer 1 is a resin film laminate with two or more layers, the two or more resin films may be laminated with an adhesive interposed therebetween. Specific examples of the preferred adhesive include the same adhesives as those exemplified for the adhesive agent layer 2 described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 µm. In addition, the lamination may be performed with an anchor coat layer formed on the resin film. Examples of the anchor coat layer include the same adhesives as those exemplified for the adhesive agent layer 2 described later. Here, the thickness of the anchor coat layer is, for example, about 0.01 to 1.0 µm.

From the viewpoint of enhancing the durability of the process film 10 against pressurization in a high-temperature and high-pressure environment, the melting point of the base material layer 1 is preferably 200°C or higher, more preferably about 200 to 450°C, still more preferably about 200 to 350°C. The melting point is a melting peak temperature measured using a differential scanning calorimeter (DSC).

Additives such as a slipping agent, a flame retardant, an antiblocking agent, an antioxidant, a light stabilizer, a tackifier and an antistatic agent may be present on at least one of the surface of the base material layer 1 and/or inside the base material layer 1. The additives may be used alone, or may be used in combination of two or more thereof.

In the present disclosure, the process film 10 may be molded and used. The process film 10 can be molded by a known method such as molding using a die (cold molding or the like) or vacuum molding. In the present disclosure, it is preferable that a slipping agent is present on a surface of the base material layer 1 from the viewpoint of enhancing the moldability of the process film 10 in molding with a die. The slipping agent is not particularly limited, and is preferably an amide-based slipping agent.

The thickness of the base material layer 1 is not particularly limited as long as functions as a protective member and a base material are performed, and the thickness of the base material layer 1 is, for example, about 3 to 200 µm, preferably 5 to 100 µm, still more preferably about 10 to 50 µm. When the base material layer 1 is a resin film laminate with two or more layers, the thickness of the resin film forming each layer is preferably about 2 to 50 µm.

A gas barrier film may be provided on one surface or both surfaces of the base material layer 1. The gas barrier film is a film having gas barrier properties. The gas barrier film mainly contributes to the gas barrier properties of the process film 10. The gas barrier film may be an inorganic substance or an organic substance, and preferably contains an inorganic substance because the gas barrier properties are high. The gas barrier film may contain an organic and inorganic composite material.

Examples of the organic substance include ethylene-vinyl alcohol copolymer (EVOH), propylene-vinyl alcohol copolymer (PVOH), and polyvinylidene chloride (PVDC).

Examples of the inorganic substance include metals (including alloys) and inorganic compounds. Examples of the gas barrier film containing an inorganic substance include metal films (for example, vapor-deposited metal films), films containing an inorganic compound as a main component (hereinafter, sometimes referred to as inorganic compound films), and organic and inorganic composite materials described later.

Examples of the metal for forming the metal film include metals such as aluminum, stainless steel, titanium, nickel, iron and copper, and alloys containing any of these metals. From the viewpoint of flexibility, the metal film is particularly preferably an aluminum film.

Examples of the inorganic compound for forming the inorganic compound film include compounds containing a metal element such as silicon, aluminum, magnesium, calcium, potassium, tin, sodium, titanium, boron, yttrium, zirconium, cerium, or zinc, or a non-metal element. Examples of the inorganic compound include inorganic oxides, inorganic oxynitrides, inorganic nitrides, inorganic oxycarbides, inorganic oxycarbonitrides, and zinc silicon oxide. Specific examples thereof include silicon oxide such as SiO₂, aluminum oxide such as Al₂O₃, magnesium oxide, titanium oxide, tin oxide, silicon zinc alloy oxide, indium alloy oxide, silicon nitride, aluminum nitride, titanium nitride, and silicon oxynitride. The inorganic compound may be used alone, or the above-described materials mixed at an arbitrary ratio may be used.

Examples of the organic and inorganic composite material include composite materials of silica as an inorganic component and a resin as an organic component. Examples of the composite material of an inorganic component and an organic component include those formed by employing a sol-gel method, and specific examples thereof include composite materials of silica and polyvinyl alcohol (polyvinyl alcohol (PVA) in which silica is uniformly dispersed). In the sol-gel method, PVA modified with a carboxyl group, an acetoacetyl group or the like can be used as well as PVA as the organic component, and silicon alkoxide (tetraethoxysilane, methyltriethoxysilane or the like) can be used as the inorganic component. In the organic and inorganic composite material, an inorganic material is uniformly dispersed in an organic material to form a thin film layer. One or, two or more of the organic and inorganic composite materials for forming the thin film layer may be used.

The gas barrier film may be a coated film made by coating or the like, or may be a vapor-deposited film. Among them, a vapor-deposited film is preferable from the viewpoint of high adhesion to the base material layer 1 and being able to exhibit high gas barrier performance. The gas barrier film may be a single film formed by single vapor deposition, or a multilayer film formed by performing vapor deposition two or more times. When the gas barrier film is a multilayer film, films having the same composition may be combined, or films having different compositions may be combined. When the gas barrier film is a multilayer film, the entire multilayer film is equivalent to one gas barrier film layer.

The thickness of the gas barrier film is not particularly limited as long as desired gas barrier properties can be exhibited, and the thickness of the gas barrier film can be appropriately set according to a type of gas barrier film. The thickness of the gas barrier film may be within the range of, for example, 5 nm or more and 200 nm or less, and is, in particularly, preferably within the range of 10 nm or more and 100 nm or less. When the gas barrier film is a multilayer film, the above-described thickness is a thickness per deposition. If the thickness of the gas barrier film is below the above-described range, it may be impossible to exhibit desired gas barrier properties due to insufficient film formation. In addition, it may be impossible to secure the strength, resulting in occurrence of time degradation. On the other hand, if the thickness of the gas barrier film is above the above-described range, defects may be likely to occur at the time of exposure to mechanical stress such as bending, or flexibility may be deteriorated.

The method for forming a gas barrier film may be any method as long as a film having a desired thickness can be formed on one surface or both surfaces of the base material layer 1, and it is possible to use a heretofore known method such as a coating method, a vapor deposition method or a press-bonding method according to a type of gas barrier film.

### [Adhesive agent layer 2]

In the process film 10, the adhesive agent layer 2 is a layer provided between the base material layer 1 and the water vapor barrier layer 3 if necessary for the purpose of enhancing bondability between these layers (bondability between the base material layer 1 and the water vapor barrier layer protective film 3b if the water vapor barrier layer protective film 3b is present).

The adhesive agent layer 2 is formed from an adhesive capable of bonding the base material layer 1 and the water vapor barrier layer 3 (or water vapor barrier layer protective film 3b). The adhesive used for forming the adhesive agent layer 2 is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 2 may be a single layer or a multi-layer.

Specific examples of the adhesive component contained in the adhesive include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a first component containing a polyol compound and a second component containing an isocyanate compound. The polyurethane adhesive is preferably a two-liquid curable polyurethane adhesive having polyol such as polyester polyol, polyether polyol or acrylic polyol as a first component, and aromatic or aliphatic polyisocyanate as a second component. Preferably, polyester polyol having a hydroxyl group in the side chain in addition to a hydroxyl group at the end of the repeating unit is used as the polyol compound.

Other components may be added to the adhesive agent layer 2 as long as bondability is not inhibited, and the adhesive agent layer 2 may contain a colorant, a thermoplastic elastomer, a tackifier, a filler, and the like. When the adhesive agent layer 2 contains a colorant, the process film 10 can be colored. As the colorant, known colorants such as pigments and dyes can be used. The colorants may be used alone, or may be used in combination of two or more thereof.

The type of pigment is not particularly limited as long as the bondability of the adhesive agent layer 2 is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the process film 10.

The average particle diameter of the pigment is not particularly limited, and is, for example, about 0.05 to 5 µm, preferably about 0.08 to 2 µm. The average particle size of the pigment is a median diameter measured by a laser diffraction/scattering particle size distribution measuring apparatus.

The content of the pigment in the adhesive agent layer 2 is not particularly limited as long as the process film 10 is colored, and the content is, for example, about 5 to 60 mass%, preferably 10 to 40 mass%.

The thickness of the adhesive agent layer 2 is not particularly limited as long as the base material layer 1 and the water vapor barrier layer 3 can be bonded to each other, and for example, the thickness is about 1 µm or more, or about 2 µm or more, and about 10 µm or less, or about 5 µm or less, and is preferably in the range of about 1 to 10 µm, about 1 to 5 µm, about 2 to 10 µm, or about 2 to 5 µm.

### [Colored Layer]

The colored layer is a layer provided between the base material layer 1 and the water vapor barrier layer 3 (or the water vapor barrier layer protective film 3b) or on the outer side of the base material layer 1 if necessary (not shown). When the adhesive agent layer 2 is present, the colored layer may be provided between the base material layer 1 and the adhesive agent layer 2 or between the adhesive agent layer 2 and the water vapor barrier layer 3 (or the water vapor barrier layer protective film 3b). The colored layer may be provided on the outer side of the base material layer 1. By providing the colored layer, the process film 10 can be colored. Coloring of the process film 10 has an advantage that it is easy to confirm by visual observation or the like that the all-solid-state battery element is uniformly pressurized.

The colored layer can be formed by, for example, applying an ink containing a colorant to the surface of the base material layer 1, or the surface of the water vapor barrier layer 3 (the surface of the water vapor barrier layer protective film 3b when the water vapor barrier layer protective film 3b is present). As the colorant, known colorants such as pigments and dyes can be used. The colorants may be used alone, or may be used in combination of two or more thereof. When the colored layer is provided on the outer side of the base material layer 1, additives such as an antiblocking agent, a matting agent, a flame retardant, an antioxidant, a tackifier and an antistatic agent may be contained. Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

Specific examples of the colorant contained in the colored layer include the same colorants as those exemplified in the section [Adhesive Agent Layer 2].

### [Water vapor barrier layer 3]

In the process film 10, the water vapor barrier layer 3, which is a layer that suppresses at least ingress of moisture, is provided if necessary.

Examples of the water vapor barrier layer 3 include metal foils, deposited films and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the water vapor barrier layer 3 include resin films provided with at least one of these deposited films and resin layers. A plurality of water vapor barrier layers 3 may be provided. Preferably, the water vapor barrier layer 3 contains a layer formed of a metal material. Specific examples of the water vapor metal material forming the water vapor barrier layer 3 include aluminum alloys, stainless steel, titanium steel and steel sheets. When the metal material is used as a metal foil, it is preferable that the metal material includes at least one of an aluminum alloy foil and a stainless steel foil.

The aluminum alloy is more preferably a soft aluminum alloy foil formed of, for example, an annealed aluminum alloy from the viewpoint of improving the moldability of the process film 10, and is preferably an aluminum alloy foil containing iron from the viewpoint of further improving the moldability. In the aluminum alloy foil containing iron (100 mass%), the content of iron is preferably 0.1 to 9.0 mass%, more preferably 0.5 to 2.0 mass%. When the content of iron is 0.1 mass% or more, it is possible to obtain a process film having more excellent moldability. When the content of iron is 9.0 mass% or less, it is possible to obtain a process film more excellent in flexibility. Examples of the soft aluminum alloy foil include aluminum alloy foils having a composition specified in JIS H4160: 1994 A8021H-O, JIS H4160: 1994 A8079H-O, JIS H4000: 2014 A8021P-O, or JIS H4000: 2014 A8079P-O. If necessary, silicon, magnesium, copper, manganese or the like may be added. Softening can be performed by annealing or the like.

Examples of the stainless steel foil include austenitic stainless steel foils, ferritic stainless steel foils, austenitic/ferritic stainless steel foils, martensitic stainless steel foils and precipitation-hardened stainless steel foils. From the viewpoint of providing the process film 10 further excellent in moldability, it is preferable that the stainless steel foil is formed of austenitic stainless steel.

Specific examples of the austenite-based stainless steel foil include SUS 304 stainless steel, SUS 301 stainless steel and SUS 316L stainless steel, and of these, SUS 304 stainless steel is especially preferable.

When the water vapor barrier layer 3 is a metal foil, the water vapor barrier layer 3 may perform a function as a barrier layer suppressing at least ingress of moisture, and has a thickness of, for example, about 1 to 200 µm. The thickness of the water vapor barrier layer 3 is, for example, preferably about 85 µm or less, more preferably about 75 µm or less, still more preferably 70 µm or less, still more preferably about 50 µm or less, still more preferably about 40 µm or less, and preferably about 1 µm or more, still more preferably about 5 µm or more, still more preferably 45 µm or more, still more preferably 50 µm or more, still more preferably 55 µm or more, and is preferably in the range of 1 to 85 µm, about 1 to 75 µm, about 1 to 70 µm, about 1 to 50 µm, about 1 to 40 µm, about 5 to 85 µm, about 5 to 75 µm, about 5 to 70 µm, about 5 to 50 µm, about 5 to 40 µm, about 45 to 85 µm, about 45 to 75 µm, about 45 to 70 µm, about 45 to 50 µm, about 50 to 85 µm, about 50 to 75 µm, about 50 to 70 µm, about 55 to 85 µm, or about 55 to 75 µm.

After the all-solid-state battery element is pressurized using the process film 10 of the present disclosure, the process film 10 is peeled from the all-solid-state battery element. From the viewpoint of enhancing separability of the process film 10 after heating, the thickness of the water vapor barrier layer 3 is particularly preferably about 20 µm or less, about 10 µm or less, about 5 to 20 µm, or about 5 to 10 µm.

### [Water vapor barrier layer protective films 3a and 3b]

In the process film 10, the water vapor barrier layer protective film 3a is provided on a surface of the water vapor barrier layer 3 on the heat-sealable resin layer 4 side if necessary. The process film 10 may include the water vapor barrier layer protective film 3a only on a surface of the water vapor barrier layer 3 on the heat-sealable resin layer 4 side, or may include the water vapor barrier layer protective films 3a and 3b on both surfaces of the water vapor barrier layer 3, respectively. It is preferable that the water vapor barrier layer protective film 3a is provided on a surface on the heat-sealable resin layer side in the all-solid-state battery 70 of the present disclosure. In addition, from the viewpoint of improving the adhesion of the water vapor barrier layer 3, it is preferable that water vapor barrier layer protective films 3a and 3b are provided on both surfaces of the water vapor barrier layer.

The water vapor barrier layer protective films 3a and 3b can be formed by subjecting the surface of the water vapor barrier layer 3 to chemical conversion treatment with a treatment liquid containing a chromium compound such as chromium oxide.

Examples of the chemical conversion treatment using a treatment liquid containing a chromium compound include a method in which a chromium compound such as chromium oxide dispersed in phosphoric acid and/or a salt thereof is applied to the surface of the water vapor barrier layer 3 and baked to form a water vapor barrier layer protective film on the surface of the water vapor barrier layer 3.

The thickness of each of the water vapor barrier layer protective films 3a and 3b is not particularly limited, and is preferably about 1 nm to 10 µm, more preferably about 1 to 100 nm, still more preferably about 1 to 50 nm from the viewpoint of effectively suppressing deterioration of the water vapor barrier layer 3. The thickness of the water vapor barrier layer protective film can be measured by observation with a transmission electron microscope or a combination of observation with a transmission electron microscope and energy dispersive X-ray spectroscopy or electron beam energy loss spectroscopy.

From the same viewpoint, the amounts of the water vapor barrier layer protective films 3a and 3b per 1 m² of the surface of the water vapor barrier layer 3 are each preferably about 1 to 500 mg, more preferably about 1 to 100 mg, still more preferably about 1 to 50 mg.

Examples of the method for applying the treatment liquid containing a chromium compound to the surface of the water vapor barrier layer include a bar coating method, a roll coating method, a gravure coating method and an immersion method.

From the viewpoint of more efficiently performing the chemical conversion treatment of the surface of the water vapor barrier layer 3, it is preferable to perform degreasing treatment by a known treatment method such as an alkali immersion method, an electrolytic cleaning method, an acid cleaning method, an electrolytic acid cleaning method or an acid activation method before the water vapor barrier layer protective films 3a and 3b are provided on the surface of the water vapor barrier layer 3.

### [Heat-sealable resin layer 4]

In the process film 10 of the present disclosure, the heat-sealable resin layer 4 is a layer (sealant layer) which corresponds to an innermost layer and performs a function of covering the all-solid-state battery element with the heat-sealable resin layers 4 heat-sealed to each other. Examples of the heat-sealing method for heat-sealing the heat-sealable resin layers 4 to each other include bar sealing, hot plate sealing, rotating roll sealing, belt sealing, impulse sealing, high-frequency sealing, and ultrasonic sealing.

The resin forming the heat-sealable resin layer 4 is not particularly limited as long as it can be heat-sealed, a resin containing a polyolefin backbone such as a polyolefin or an acid-modified polyolefin is preferable. The resin forming the heat-sealable resin layer 4 can be confirmed to contain a polyolefin backbone by an analysis method such as infrared spectroscopy or gas chromatography-mass spectrometry. It is preferable that a peak derived from maleic anhydride is detected when the resin forming the heat-sealable resin layer 4 is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. When the heat-sealable resin layer 4 is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

Specific examples of the polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbornene; cyclic dienes such as cyclopentadiene, dicyclopentadiene, cyclohexadiene and norbornadiene. Among these polyolefins, cyclic alkenes are preferable, and norbornene is more preferable.

The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

The heat-sealable resin layer 4 may be formed from one resin alone, or may be formed from a blend polymer obtained by combining two or more resins. Further, the heat-sealable resin layer 4 may be composed of only one layer, or may be composed of two or more layers with the same resin component or different resin components.

In the process film 10 of the present disclosure, it is also preferable that the heat-sealable resin layer 4 is formed of a polybutylene terephthalate film or a polytetrafluoroethylene film. These films are excellent in heat resistance, and can be heat-sealed in a high-temperature environment. Therefore, these films are particularly effective when the all-solid-state battery element is pressurized in a high-temperature and high-pressure environment using the process film 10. The polybutylene terephthalate film or polytetrafluoroethylene film for forming the heat-sealable resin layer 4 may be formed into the heat-sealable resin layer 4 by laminating a polybutylene terephthalate film or polytetrafluoroethylene film provided in advance with the adhesive layer 5, or may be formed into a film by melt-extruding a resin for forming the polybutylene terephthalate film or polytetrafluoroethylene film and laminated with the adhesive layer 5.

It is preferable that the polybutylene terephthalate film further contains an elastomer in addition to polybutylene terephthalate. The elastomer is one that serves to enhance the flexibility of the polybutylene terephthalate film while securing the durability of the polybutylene terephthalate film in a high-temperature environment. Examples of preferred elastomers include polytetramethylene glycol. In the polybutylene terephthalate film, the content of the elastomer is not particularly limited as long as the flexibility of the polybutylene terephthalate film can be enhanced while the durability of the polybutylene terephthalate film in a high-temperature environment is secured, and the content of the elastomer is, for example, about 0.1 mass% or more, preferably about 0.5 mass% or more, more preferably about 1.0 mass% or more, still more preferably about 3.0 mass% or more. The content is, for example, about 10.0 mass% or less, about 8.0 mass% or less, or about 5.0 mass% or less. The content is preferably in the range of about 0.1 to 10.0 mass%, about 0.1 to 8.0 mass%, about 0.1 to 5.0 mass%, about 0.5 to 10.0 mass%, about 0.5 to 8.0 mass%, about 0.5 to 5.0 mass%, about 1.0 to 10.0 mass%, about 1.0 to 8.0 mass%, about 1.0 to 5.0 mass%, about 3.0 to 10.0 mass%, about 3.0 to 8.0 mass%, or about 3.0 to 5.0 mass%.

When the heat-sealable resin layer 4 is composed of two or more layers, it is preferable that at least one layer is preferably formed from a polybutylene terephthalate film or a polytetrafluoroethylene film, and the polybutylene terephthalate film forms an innermost layer. When the heat-sealable resin layer 4 is formed from two or more layers, the layer which is not formed from a polybutylene terephthalate film or a polytetrafluoroethylene film may be, for example, a layer formed from a polyolefin such as polypropylene or polyethylene, an acid-modified polyolefin such as acid-modified polypropylene or acid-modified polyethylene, or the like. However, since polyolefins and acid-modified polyolefins have lower durability in a high-temperature environment as compared to a polybutylene terephthalate or polytetrafluoroethylene film, it is preferable that the heat-sealable resin layer 4 includes only a polybutylene terephthalate film or a polytetrafluoroethylene film.

For facilitating delamination between the heat-sealable resin layers 4 heat-sealed to each other, for example, a resin obtained by dispersing a vinyl polymer such as styrene in a finely divided state in a polyolefin may be used for formation of the heat-sealable resin layer 4, or tackiness may be imparted to the heat-sealable resin layer 4. This enables a peeling step to be easily carried out by eliminating the necessity to cut the process film 10 with scissors, a cutter or the like in peeling of the process film 10 from the all-solid-state battery element.

The melting point of the heat-sealable resin layer 4 is preferably about 140 to 240°C, more preferably about 140 to 230°C from the viewpoint of enhancing durability against pressurization in a high-temperature and high-pressure environment and the heat-sealability. The melting point is a melting peak temperature measured using a differential scanning calorimeter (DSC).

The heat-sealable resin layer 4 may contain a moisture adsorbing material if necessary. The moisture adsorbing material is not particularly limited, and a known moisture adsorbing material can be used. The moisture adsorbing materials may be used alone, or may be used in combination of two or more thereof.

The moisture adsorbing material is not particularly limited, and is preferably a material containing one or more selected from the group consisting of calcium oxide, anhydrous magnesium sulfate, magnesium oxide, calcium chloride, zeolite, synthetic zeolite, aluminum oxide, silica gel, alumina gel, silica alumina gel, and dried alum. Among them, calcium oxide and anhydrous magnesium sulfate are particularly preferable.

When a moisture adsorbing material is blended in the heat-sealable resin layer 4, the content of the moisture adsorbing material may be, for example, 0.1 to 50 mass%.

The heat-sealable resin layer 4 may contain a hydrogen sulfide absorbing material if necessary. The hydrogen sulfide absorbing material is not particularly limited, and a known hydrogen sulfide absorbing material can be used. The hydrogen sulfide absorbing materials may be used alone, or may be used in combination of two or more thereof. The heat-sealable resin layer 4 may contain both the moisture adsorbing material and the hydrogen sulfide absorbing material if necessary.

The hydrogen sulfide absorbing material is not particularly limited, and examples thereof include materials including a metal oxide and/or an inorganic substance in which a metal or metal ions are carried or mixed, where the metal oxide is preferably one or more selected from the group consisting of CuO, ZnO and AgO, and the metal species the inorganic substance in which a metal or metal ions are carried or mixed is one or more selected from the group consisting of Ca, Mg, Na, Cu, Zn, Ag, Pt, Au, Fe, Al and Ni; and materials including one or more selected from the group consisting of hydrophobic zeolite having a SiO₂/Al₂O₃ molar ratio of 1/1 to 2,000/1, bentonite and sepiolite. The hydrogen sulfide absorbing material has a maximum particle size of 20 µm or less and a number average particle size of 0.1 µm or more and 15 µm or less.

When a hydrogen sulfide absorbing material is blended in the heat-sealable resin layer 4, the content of the hydrogen sulfide absorbing material may be, for example, 0.3 to 30 mass%.

When the heat-sealable resin layer 4 contains a moisture adsorbing material or a hydrogen sulfide absorbing material, it is preferable that the heat-sealable resin layer 4 contains the moisture adsorbing material or the hydrogen sulfide absorbing material on the base material layer 1 side so that heat-sealability is not impaired. For example, when the heat-sealable resin layer 4 has two or more layers, it is preferable that a moisture adsorbing material or a hydrogen sulfide absorbing material is contained not in an innermost layer, but in a layer on the base material layer 1 side.

The heat-sealable resin layer 4 may contain a slipping agent etc. if necessary. When the heat-sealable resin layer 4 contains a slipping agent, moldability of the process film can be improved. The slipping agent is not particularly limited, and a known slipping agent can be used. The slipping agents may be used alone, or may be used in combination of two or more thereof.

The slipping agent is not particularly limited, and is preferably an amide-based slipping agent. Specific examples of the slipping agent include those exemplified for the base material layer 1. The slipping agents may be used alone, or may be used in combination of two or more thereof.

When a slipping agent is present on the surface of the heat-sealable resin layer 4, the amount of the slipping agent present is not particularly limited, and is preferably about 10 to 50 mg/m², more preferably about 15 to 40 mg/m² from the viewpoint of improving the moldability of the process film.

The slipping agent present on the surface of the heat-sealable resin layer 4 may be one obtained by exuding the slipping agent contained in the resin forming the heat-sealable resin layer 4, or one obtained by applying a slipping agent to the surface of the heat-sealable resin layer 4.

The thickness of the heat-sealable resin layer 4 is not particularly limited as long as the heat-sealable resin layers are heat-sealed to each other to perform a function of covering the all-solid-state battery element, and the thickness is, for example, about 100 µm or less, preferably about 85 µm or less, more preferably about 15 to 85 µm. For example, when the thickness of the adhesive layer 5 described later is 10 µm or more, the thickness of the heat-sealable resin layer 4 is preferably about 85 µm or less, more preferably about 15 to 45 µm. For example, when the thickness of the adhesive layer 5 described later is less than 10 µm or the adhesive layer 5 is not provided, the thickness of the heat-sealable resin layer 4 is preferably about 20 µm or more, more preferably about 35 to 85 µm.

### [Adhesive Layer 5]

In the process film 10, the adhesive layer 5 is a layer provided between the water vapor barrier layer 3 (water vapor barrier layer protective film 3a when the water vapor barrier layer protective film 3a is present) and the heat-sealable resin layer 4 for firmly bonding these layers to each other.

The adhesive layer 5 is formed from a resin capable of bonding the water vapor barrier layer 3 and the heat-sealable resin layer 4 to each other. The resin to be used for forming the adhesive layer 5 is, for example, the same as that of the adhesive exemplified for the adhesive agent layer 2.

Further, from the viewpoint of securing durability, such as heat resistance and content resistance and securing moldability, of the process film while reducing the thickness, the adhesive layer 5 is more preferably a cured product of a resin composition containing a curing agent.

Examples of the curing agent include curing agents having an oxazoline group and curing agents having an isocyanate group. Examples of the curing agent having a C-O-C bond include curing agents having an oxazoline group, curing agents having an epoxy group. Whether the adhesive layer 5 is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the water vapor barrier layer 3 and the adhesive layer 5. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer 5 is preferably in the range of 0.1 to 50 mass%, more preferably in the range of 0.5 to 40 mass% in the resin composition forming the adhesive layer 5. This enables effective improvement of adhesion between the water vapor barrier layer 3 and the adhesive layer 5.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 5 is preferably in the range of 0.1 to 50 mass%, more preferably in the range of 0.5 to 40 mass% in the resin composition forming the adhesive layer 5. This enables effective improvement of adhesion between the water vapor barrier layer 3 and the adhesive layer 5.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the present invention, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, bisphenol F-type glycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 5 is preferably in the range of 0.1 to 50 mass%, more preferably in the range of 0.5 to 40 mass% in the resin composition forming the adhesive layer 5. This enables effective improvement of adhesion between the water vapor barrier layer 3 and the adhesive layer 5.

The polyurethane is not particularly limited, and a known polyurethane can be used. The adhesive layer 5 may be, for example, a cured product of two-liquid curable polyurethane.

The proportion of the polyurethane in the adhesive layer 5 is preferably in the range of 0.1 to 50 mass%, more preferably in the range of 0.5 to 40 mass% in the resin composition forming the adhesive layer 5. This enables effective improvement of adhesion between the water vapor barrier layer 3 and the adhesive layer 5 in an atmosphere including a component which induces corrosion of the water vapor barrier layer, such as an electrolytic solution.

It is also preferable that the adhesive layer 5 is formed of a cured product of a resin composition containing at least one of polyester and polycarbonate and at least one of an alicyclic isocyanate compound and an aromatic isocyanate compound from the viewpoint of durability against a high-temperature and a high-pressure environment.

The polyester is preferably polyester polyol. The polyester polyol is not particularly limited as long as it has an ester bond in the polymer main chain and a plurality of hydroxyl groups at the terminal or the side chain. The polycarbonate is preferably polycarbonate polyol. The polyester polyol is not particularly limited as long as it has a carbonate bond in the polymer main chain and a plurality of hydroxyl groups at the terminal or the side chain. One type or two or more types of each of the polyester and the polycarbonate may be contained in the resin composition forming the adhesive layer 5.

The alicyclic isocyanate compound is not particularly limited as long as it is a compound having an alicyclic structure and an isocyanate group. It is preferable that the alicyclic isocyanate compound has two or more isocyanate groups. Specific examples of the alicyclic isocyanate compound include isophorone diisocyanate (IPDI) etc., polymerized or nurated products thereof, mixtures thereof, and copolymers of these compounds with other polymers. Examples thereof include adduct forms, biuret forms, and isocyanurate forms. One type or two or more types of the alicyclic isocyanate compound may be contained in the resin composition forming the adhesive layer 5.

The alicyclic isocyanate compound is not particularly limited as long as it is a compound having an aromatic ring and an isocyanate group. It is preferable that the aromatic isocyanate compound has two or more isocyanate groups. Specific examples of the aromatic isocyanate compound include tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms. One type or two or more types of the aromatic isocyanate compound may be contained in the resin composition forming the adhesive layer 5.

When the resin composition that forms the adhesive layer 5 contains at least one of an alicyclic isocyanate compound and an aromatic isocyanate compound, for example, the resin composition may contain an alicyclic isocyanate compound while being free of an aromatic isocyanate compound, or for example, the resin composition may contain an aromatic isocyanate compound while being free of an alicyclic isocyanate compound, or for example, the resin composition may contain both an alicyclic isocyanate compound and an aromatic isocyanate compound.

The content of each of the alicyclic isocyanate compound and the aromatic isocyanate compound in the adhesive layer 5 is preferably in the range of 0.1 to 50 mass%, more preferably in the range of 0.5 to 40 mass% in the resin composition forming the adhesive layer 5. When the adhesive layer 5 contains both the alicyclic isocyanate compound and the aromatic isocyanate compound, the total content thereof is preferably in the range of 0.1 to 50 mass%, more preferably in the range of 0.5 to 40 mass% in the resin composition forming the adhesive layer 5.

The thickness of the adhesive layer 5 is preferably about 50 µm or less, about 40 µm or less, about 30 µm or less, about 20 µm or less, or about 5 µm or less, and preferably about 0.1 µm or more or about 0.5 µm or more. The thickness is preferably in the range of about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm or about 0.5 to 5 µm.

### [Buffer layer 6]

The process film 10 may include a buffer layer 6 for imparting a buffer function of uniformly dispersing the pressure from pressurization of the all-solid-state battery element. The buffer layer 6 may be located outside the heat-sealable resin layer 4 of the process film 10, preferably on the outer side of the base material layer 1. The base material layer 1 may form the buffer layer 6. In order for the base material layer 1 to form the buffer layer 6, a material for forming the buffer layer 6, which will be described later, is used as a material of the base material layer 1. This enables a buffer function to be imparted to the process film 10 without providing the buffer layer 6 separately from the base material layer 1.

The material forming the buffer layer 6 is not particularly limited as long as it can serve as a cushion against high-pressure pressing (can disperse pressure), and rubber, nonwoven fabrics, expanded sheets and the like are preferable. The rubber is not particularly limited as long as it has elasticity, and examples thereof include natural rubber, fluororubber, and silicone rubber. The rubber hardness is preferably about 20 to 90. The material for forming the nonwoven fabric is not particularly limited. Preferably, the same resins as those exemplified for the base material layer 1 described later are exemplified. Since the all-solid-state battery is assumed to be used in a high-temperature environment, it is preferable that the nonwoven fabric is composed of a material excellent in heat resistance.

From the viewpoint of uniformly dispersing the pressure from pressurization of the all-solid-state battery element, the areal weight of the buffer layer 6 is preferably about 20 g/m² or more, more preferably about 30 g/m² or more, still more preferably 100 g/m² or more, and preferably about 300 g/m² or less, more preferably about 200 g/m² or less, and is preferably in the range of about 20 to 300 g/m², about 20 to 200 g/m², about 30 to 300 g/m², about 30 to 200 g/m², about 100 to 300 g/m² or about 100 to 200 g/m², especially preferably about 100 to 300 g/m² or about 100 to 200 g/m².

From the viewpoint of uniformly dispersing the pressure from pressurization of the all-solid-state battery element, the fiber diameter of the fiber forming the buffer layer 6 is preferably about 5 µm or more, more preferably about 15 µm or more, and preferably 60 µm or less, more preferably about 40 µm or less, and is preferably in the range of about 5 to 60 µm, about 5 to 40 µm, about 15 to 60 µm or about 15 to 40 µm, especially preferably about 5 to 40 µm.

The thickness of the buffer layer 6 is preferably about 100 µm or more, about 200 µm or more, about 1,000 µm or more, about 5,000 µm or less, about 3,000 µm or less, and is preferably in the range of about 100 to 5,000 µm, about 100 to 3,000 µm, about 200 to 5,000 µm, about 200 to 3,000 µm, about 1,000 to 5,000 µm, or about 1,000 to 3,000 µm, especially preferably 1,000 to 3,000 µm.

As described above, the buffer layer 6 may be bonded to the base material layer 1 to form a part of the process film 10, or may be provided as a member different from the process film 10, and used together with the process film 10 in pressurization of the all-solid-state battery element.

The method for manufacturing the process film 10 is not particularly limited as long as a laminate including the process film 10 is obtained in which the layers of the exterior material are laminated. Examples thereof include a method including the step of laminating at least the base material layer 1 and the heat-sealable resin layer 4 in this order from the outside. The base material layer 1 and the heat-sealable resin layer 4 can be laminated by bonding using the adhesive agent layer 2, a thermal lamination method, melt extrusion, or the like.

For example, when the process film 10 has the water vapor barrier layer 3, an example of the method for manufacturing the process film 10 is as follows. First, a laminate including the base material layer 1, the adhesive agent layer 2 and the water vapor barrier layer 3 in this order (hereinafter, the laminate may be described as a "laminate A") is formed. Specifically, the laminate A can be formed by a dry lamination method in which an adhesive to be used for formation of the adhesive agent layer 2 is applied onto the base material layer 1 or the water vapor barrier layer 3, using a coating method such as a gravure coating method or a roll coating method, and dried, the water vapor barrier layer 3 or the base material layer 1 is then laminated, and the adhesive agent layer 2 is cured.

Then, the heat-sealable resin layer 4 is laminated on the water vapor barrier layer 3 of the laminate A. When the heat-sealable resin layer 4 is laminated directly on the water vapor barrier layer 3, a resin component that forms the heat-sealable resin layer 4 may be applied onto the water vapor barrier layer 3 of the laminate A by a method such as a gravure coating method or a roll coating method. When the adhesive layer 5 is provided between the water vapor barrier layer 3 and the heat-sealable resin layer 4, mention is made of, for example, (1) a method in which the adhesive layer 5 and the heat-sealable resin layer 4 are co-extruded to be laminated on the water vapor barrier layer 3 of the laminate A (co-extrusion lamination method); (2) a method in which the adhesive layer 5 and the heat-sealable resin layer 4 are laminated to form a laminate separately, and the laminate is laminated on the water vapor barrier layer 3 of the laminate A by a thermal lamination method; (3) a method in which an adhesive for formation of the adhesive layer 5 is laminated on the water vapor barrier layer 3 of the laminate A by an extrusion method or a method in which the adhesive is applied by solution coating, dried at a high temperature and baked, and the heat-sealable resin layer 4 formed in a sheet shape beforehand is laminated on the adhesive layer 5 by a thermal lamination method; and (4) a method in which the melted adhesive layer 5 is poured between the water vapor barrier layer 3 of the laminate A and the heat-sealable resin layer 4 formed in a sheet shape beforehand, and simultaneously the laminate A and the heat-sealable resin layer 4 are bonded together with the adhesive layer 5 interposed therebetween (sandwich lamination).

When the buffer layer 6 is provided on the process film 10, for example, the buffer layer 6 is laminated, for example, on the outer side of the base material layer 1. For lamination of the buffer layer 6, an adhesive or the like can be used. As described above, the base material layer 1 may form the buffer layer 6, and here, a material for forming the buffer layer 6 is used as a material for forming the base material layer 1.

A laminate including the buffer layer 6 provided if necessary, the base material layer 1 (which may form the buffer layer 6), the adhesive agent layer 2 provided if necessary, the water vapor barrier layer protective film 3b provided if necessary, the water vapor barrier layer 3 provided if necessary, the water vapor barrier layer protective film 3a provided if necessary, the adhesive layer 5 provided if necessary, and the heat-sealable resin layer 4 in this order is formed in the manner described above, and the laminate may be further subjected to a heating treatment of a hot roll contact type, a hot air type, a near-infrared type, a far-infrared type or the like for enhancing the bondability of the adhesive agent layer 2 and the adhesive layer 5 provided if necessary. As conditions for such a heating treatment, for example, the temperature is about 150 to 250°C, and the time is about 1 to 5 minutes.

The layers that form the process film 10 may be subjected to a surface activation treatment such as a corona treatment, a blast treatment, an oxidation treatment or an ozone treatment if necessary for improving or stabilizing film formability, lamination processing and final product secondary processing (pouching and embossing molding) suitability, and the like. For example, by subjecting at least one surface of the base material layer 1 to a corona treatment, film formability, lamination processing and final product secondary processing suitability, and the like can be improved.

### 3. All-solid-state battery element

The all-solid-state battery element to which the process film 10 (hereinafter, sometimes referred to as a "process film 10") of the present disclosure is applied is not particularly limited. That is, the all-solid-state battery element is not particularly limited as long as it is a battery element for an all-solid-state battery, and the all-solid-state battery element may be a known all-solid-state battery element that is used for an all-solid-state battery.

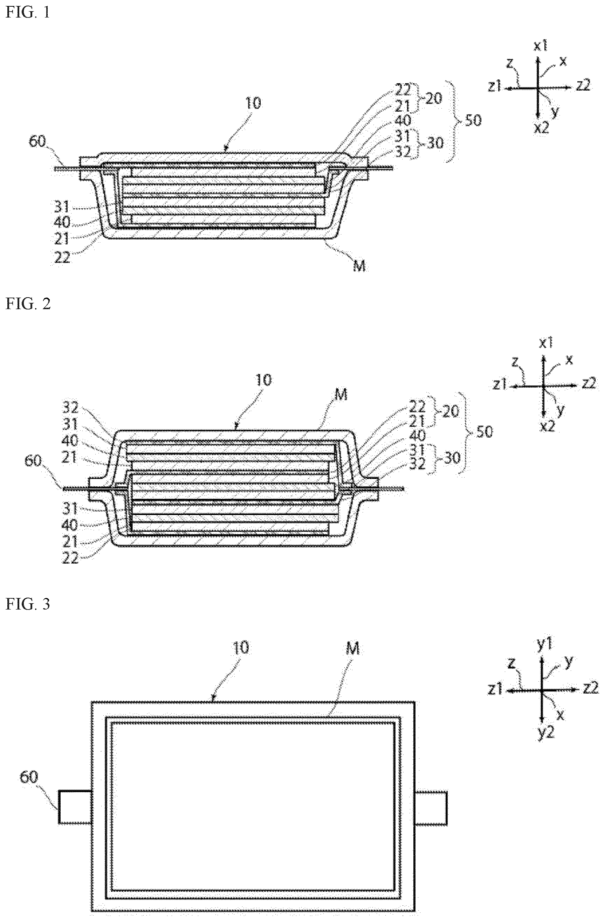

Figs. 1 to 3 are schematic views showing a state in which an all-solid-state battery element is covered using the process film of the present disclosure. As shown in these schematic views, an all-solid-state battery element including at least a unit cell 50 including a positive active material layer 31, a negative active material layer 21, a positive active material layer 31, and a solid electrolyte layer 40 laminated between the positive active material layer 31 and the negative active material layer 21 is covered with the process film 10 of the present disclosure. More specifically, the positive active material layer 31 is laminated on the positive electrode current collector 32 to form the positive electrode layer 30, and the negative active material layer 21 is laminated on the negative electrode current collector 22 to form the negative electrode layer 20. The positive electrode current collector 32 and the negative electrode current collector 22 are each bonded to a terminal 60 exposed to the outside and electrically connected to the external environment. The solid electrolyte layer 40 is laminated between the positive electrode layer 30 and the negative electrode layer 20, and the positive electrode layer 30, the negative electrode layer 20 and the solid electrolyte layer 40 form the unit cell 50. The all-solid-state battery element may include only one unit cell 50 or may include a plurality of unit cells 50. Fig. 1 shows an all-solid-state battery element including two unit cells 50, and Fig. 2 shows an aspect in which three unit cells 50 are laminated to form an all-solid-state battery element.

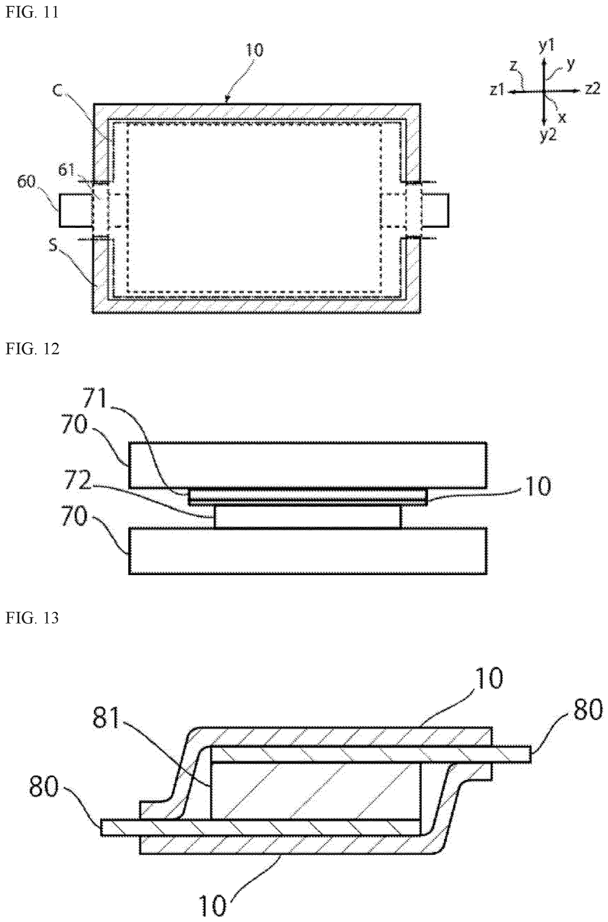

The all-solid-state battery element is covered with the process film 10, and at least a part of the heat-sealable resin layers 4 at the peripheral edge portion of the process film 10 is heat-sealed. In this state, pressurization is performed. Here, the all-solid-state battery element may be covered with the process film 10 with the terminals 60 being inside the peripheral edge portion of the process film 10 in their entirety (see Fig. 9), or the all-solid-state battery element may be covered with the process film 10 with the terminals 60 protruding outside the peripheral edge portion (see Figs. 10 and 11). When the peripheries of the heat-sealable resin layers 4 at the peripheral edge portion of the process film 10 are heat-sealed in their entirety, the all-solid-state battery element is hermetically sealed (see Figs. 9 and 10). When an all-solid-state battery element is housed in a packaging formed from the process film 10 of the present disclosure, the packaging is formed in such a manner that the heat-sealable resin portion of the process film 10 of the present disclosure is on the inner side (a surface contacting the battery element).

Figs. 9 and 10 are schematic plan views showing a state in which the all-solid-state battery element is covered with the process film 10 without molding the process film 10. It is preferable that as shown in Figs. 9 to 11, an adhesive film 61 is disposed on the terminal 60 for enhancing adhesion between the terminal 60 and an all-solid-state battery packaging material for sealing an all-solid-state battery element after the process film 10 is peeled. Fig. 9 shows a state in which the terminals 60 and the adhesive film 61 of the all-solid-state battery element are all sealed in a packaging formed of the process film 10. In Fig. 9, the entirety of each of the terminals 60 is hermetically sealed inside the heat-sealed portion S formed by heat-sealing the peripheral edge portions of the process film 10. In Figs. 10 and 11, the process film 10 is heat-sealed from above the terminal 60 in a state in which the lead end part of each of the terminals 60 of the all-solid-state battery element protrudes from the packaging. In Fig. 10, the adhesive film 61 is present inside the heat-sealed portion S at the peripheral edge portion of the process film 10, and the packaging is hermetically sealed without heat-sealing the adhesive film 61. The adhesive film 61 may be present on the outer side of the heat-sealed portion S at the peripheral edge of the process film 10. On the other hand, Fig. 11 shows a state in which the adhesive film 61 is located in the peripheral edge portion of the process film 10, and the heat-sealed portion S is provided in the peripheral edge portion of the process film 10 in such a manner as to avoid the adhesive film 61. In the aspect of Fig. 11, the packaging is not hermetically sealed. From the viewpoint of more suitably suppressing ingress of moisture into the packaging, it is preferable that the terminals 60 of the all-solid-state battery element and the adhesive film 61 are sealed in their entirety in the package formed of the process film 10 as shown in Fig. 9. When the heat-sealed portion S is formed on the terminal 60 as shown in Fig. 10, delamination can be facilitated by triggering delamination after pressurization because adhesion between the terminal 60 and the all-solid-state battery packaging material is low. In peeling of the process film 10 from the all-solid-state battery element, for example, the process film 10 may be cut along a dotted-dashed line S inside the heat-sealed portion S so as not to damage the all-solid-state battery element as in schematic views of Figs. 9 to 11.

As described above, the all-solid-state battery element to which the process film 10 of the present disclosure is applied is not particularly limited. Hereinafter, materials and the like of members forming the all-solid-state battery element to which the process film 10 of the present disclosure is applied will be exemplified.

In the all-solid-state battery element, at least the positive electrode layer 30, the negative electrode layer 20 and the solid electrolyte layer 40 form the unit cell 50 as described above. The positive electrode layer 30 has a structure in which the positive active material layer 31 is laminated on the positive electrode current collector 32. The negative electrode layer 20 has a structure in which the negative active material layer 21 is laminated on the negative electrode current collector 22. The positive electrode current collector 32 and the negative electrode current collector 22 are each bonded to a terminal 60 exposed to the outside and electrically connected to the external environment.

### [Positive active material layer 31]

The positive active material layer 31 is a layer containing at least a positive active material. If necessary, the positive active material layer 31 may further contain a solid electrolyte material, a conductive material, a binding material and the like in addition to the positive active material.

The positive active material is not particularly limited, and examples thereof include oxide active materials and sulfide active materials. When the all-solid-state battery is an all-solid-state lithium battery, examples of the oxide active material used as the positive active material include rock salt layered active materials such as LiCoO₂, LiMnO₂, LiNiO₂, LiVO₂ and LiNi_{1/3}Co_{1/3}Mn_{1/3}O₂, spinel type active materials such as LiMn₂O₄ and Li(Ni_{0.5}Mn_{1.5})O₄, olivine type active materials such as LiFePO₄ and LiMnPO₄, and Si-containing active materials such as Li₂FeSiO₄ and Li₂MnSiO₄. In addition, examples of the sulfide active material used as the positive active material of the all-solid-state lithium battery include copper shredder, iron sulfide, cobalt sulfide and nickel sulfide.

The shape of the positive active material is not particularly limited, and examples thereof include a particle shape. Preferably, the mean particle size (D₅₀) of the positive active material is, for example, about 0.1 to 50 µm. The content of the positive active material in the positive active material layer 31 is preferably about 10 to 99 mass%, more preferably about 20 to 90 mass%.

Preferably, the positive active material layer 31 further contains a solid electrolyte material. This enables improvement of ion conductivity in the positive active material layer 31. The solid electrolyte material contained in the positive active material layer 31 is the same as the solid electrolyte material exemplified for the solid electrolyte layer 40 described later. The content of the solid electrolyte material in the positive active material layer is preferably about 1 to 90 mass%, more preferably about 10 to 80 mass%.

The positive active material layer 31 may further contain a conductive material. Addition of a conductive material enables improvement of the electron conductivity of the positive active material layer. Examples of the conductive material include acetylene black, Ketjen black and carbon fiber. The positive active material layer may further contain a binding material. Examples of the binding material include fluorine-containing binding materials such as polytetrafluoroethylene (PTFE) and polyvinylidene fluoride (PVDF).

The thickness of the positive active material layer 31 is appropriately set according to the size and the like of the all-solid-state battery, and is preferably about 0.1 to 1000 µm.

### [Positive electrode current collector 32]

Examples of the material forming the positive electrode current collector 32 include stainless steel (SUS), aluminum, nickel, iron, titanium and carbon.

The thickness of the positive electrode current collector 32 is appropriately set according to the size and the like of the all-solid-state battery, and is preferably about 10 to 1,000 µm.

### [Negative active material layer 21]

The negative active material layer 21 is a layer containing at least a negative active material. If necessary, the negative active material layer 21 may contain a solid electrolyte material, a conductive material, a binding material and the like in addition to the negative active material.

The negative active material is not particularly limited, and examples thereof include carbon active materials, metal active materials and oxide active materials. Examples of the carbon active material include graphite such as mesocarbon microbeads (MCMB) and highly oriented graphite (HOPG), and amorphous carbon such as hard carbon and soft carbon. Examples of the metal active material include In, Al, Si, and Sn. Examples of the oxide active material include Nb₂O₅, Li₄Ti₅O₁₂ and SiO.

The shape of the negative active material is not particularly limited, and examples thereof include a particle shape and a film shape. The mean particle size (D₅₀) of the negative active material is preferably about 0.1 to 50 µm. The content of the negative active material in the negative active material layer 21 is, for example, about 10 to 99 mass%, more preferably about 20 to 90 mass%.

Preferably, the negative active material layer 21 further contains a solid electrolyte material. This enables improvement of ion conductivity in the negative active material layer 21. The solid electrolyte material contained in the negative active material layer 21 is the same as the solid electrolyte material exemplified for the solid electrolyte layer 40 described later. The content of the solid electrolyte material in the negative active material layer 21 is preferably about 1 to 90 mass%, more preferably about 10 to 80 mass%.

The negative active material layer 21 may further contain a conductive material. The negative active material layer 21 may further contain a binding material. The conductive material and the binding material are the same as those exemplified for the positive active material layer 31 described above.

The thickness of the negative active material layer 21 is appropriately set according to the size and the like of the all-solid-state battery, and is preferably about 0.1 to 1000 µm.

### [Negative electrode current collector 22]

Examples of the material forming the negative electrode current collector 22 include stainless steel (SUS), copper, nickel, and carbon.

The thickness of the negative electrode current collector 22 is appropriately set according to the size and the like of the all-solid-state battery, and is preferably about 10 to 1,000 µm.

### [Solid electrolyte layer 40]

The solid electrolyte layer 40 is a layer containing a solid electrolyte material. Examples of the solid electrolyte material include sulfide solid electrolyte materials and oxide solid electrolyte materials.

Sulfide solid electrolyte materials are preferable because many of the sulfide solid electrolyte materials have higher ion conductivity over oxide solid electrolyte materials, and oxide solid electrolyte materials are preferable because they have higher chemical stability over sulfide solid electrolyte materials.

Specific examples of the oxide solid electrolyte material include compounds having a NASICON-type structure. Examples of the compound having a NASICON-type structure include a compound represented by the general formula Li₁₊ₓAlₓGe₂₋ₓ(PO₄)₃ (0 ≤ x ≤ 2). In particular, the compound is preferably Li_{1.5}Al_{0.5}Ge_{1.5}(PO₄)₃. Examples of the compound having a NASICON-type structure include a compound represented by the general formula Li₁₊ₓAlxTi₂₋ₓ(PO₄)₃ (0 ≤ x ≤ 2). In particular, the compound is preferably Li_{1.5}Al_{0.5}Ti_{1.5}(PO₄)₃. Examples of the oxide solid electrolyte material used for the all-solid lithium secondary battery include LiLaTiO (e.g. Li_{0.34}La_{0.51}TiO₃) and LiPON (e.g. Li_{2.9}PO_{3.3}N_{0.46}) and LiLaZrO (e.g.Li₇La₃Zr₂O₁₂).

Specific examples of the sulfide solid electrolyte material include Li₂S-P₂S₅, Li₂S-P₂S₅-LiI, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₆PS₅Cl, Li₇P₃S₁₁, Li₂SP₂S₅-ZmSn (where each of m and n is a positive number, and Z is any of Ge, Zn, and Ga), Li₂S-GeS₂, Li₂S-SiS₂-Li₃PO₄, and Li₂S-SiS₂-LiₓMO_{y} (where each of x and y is a positive number, and M is any one of P, Si, Ge, B, Al, Ga, and In). Note that the above description of "Li₂S-P₂S₅" means a sulfide solid electrolyte material obtained using a raw material composition containing Li₂S and P₂S₅, and the same applies to other descriptions. The sulfide solid electrolyte material may be sulfide glass or crystallized sulfide glass.

The content of the solid electrolyte material in the solid electrolyte layer 40 is not particularly limited, and is preferably 60 mass% or more, more preferably 70 mass% or more, still more preferably 80 mass% or more. The solid electrolyte layer may contain a binding material or may include only a solid electrolyte material.

The thickness of the solid electrolyte layer 40 is appropriately set according to the size and the like of the all-solid-state battery, and is preferably about 0.1 to 1,000 µm, more preferably about 0.1 to 300 µm.

From the viewpoint of suitably suppressing delamination between the solid electrolyte and the negative active material layer (and between the solid electrolyte and the positive active material layer), the pressure applied to the all-solid-state battery element in the pressurization step is preferably about 1 MPa or more, more preferably 10 MPa or more, still more preferably about 50 MPa or more, still more preferably about 100 MPa or more, and preferably about 500 MPa or less, more preferably about 300 MPa or less, still more preferably about 100 MPa or less, and is preferably in the range of about 1 to 500 MPa, about 1 to 300 MPa, about 1 to 100 MPa, about 10 to 500 MPa, about 10 to 300 MPa, about 50 to 500 MPa, about 50 to 500 MPa, about 50 to 300 MPa, about 50 to 100 MPa, about 100 to 500 MPa or about 100 to 300 MPa. As a method for pressurization, a method using a pressurizing apparatus is employed, such as (hot) roll pressing or (hot) high-pressure pressing with metal plates from above and below.

From the same viewpoint, the temperature at which the all-solid-state battery element is preferably 20°C or higher, more preferably 40°C or higher, and preferably 200°C or lower, more preferably 150°C or lower, and is preferably in the range of about 20 to 150°C.

The shape of the all-solid-state battery element covered with the process film of the present disclosure is not particularly limited, and is preferably a rectangular shape in plan view as shown in, for example, the schematic diagram of Fig. 3. Further, the ratio of the length of the first side of the all-solid-state battery element having a rectangular shape in plan view to the length of the second side in a direction perpendicular to the first side (length of first side : length of second side) is preferably about 1: 1 to 1: 5. If the length of the second side is excessively large relative to the first side, the R value of a ridgeline (first curved portion as described later) along the second side of a molded part M tends to be excessively large because the second side is difficult to fix to a mold at the time when the process film 10 is molded to form the later-described molded part M.

It is preferable that the all-solid-state battery element is housed in a molded part M which has a rectangular shape in plan view, and is formed with the process film 10 protruding from the heat-sealable resin layer 4 side to the water vapor barrier layer 3 side as shown in the schematic views of Figs. 1 to 3. Fig. 1 is a diagram in which a molded part M is formed on one side of the all-solid-state battery element. Fig. 2 is a diagram in which a molded part M is formed on one side of the all-solid-state battery element.

### 4. Method for manufacturing all-solid-state battery

A method for manufacturing an all-solid-state battery according to the present disclosure is characterized by using the process film 10 of the present disclosure, and specifically, the method includes the following steps:
pressurizing an all-solid-state battery element with the all-solid-state battery element covered with a process film;
peeling the process film from the all-solid-state battery element; and
sealing the all-solid-state battery element with a packaging material.

As described above, the process film 10 of the present disclosure includes a laminate including at least a base material layer and a heat-sealable resin layer in this order from the outside. Details of the process film 10 of the present disclosure are as described above.

The step of pressurizing an all-solid-state battery element with the all-solid-state battery element covered with a process film is a step for suppressing delamination between a solid electrolyte of the all-solid-state battery element and a negative active material layer or a positive active material layer. In the method for manufacturing an all-solid-state battery according to the present disclosure, a falling object generated by pressurization of the all-solid-state battery element is prevented from sticking to an electrode, a pressurizing apparatus or the like by providing the step.

For covering the all-solid-state battery element with the process film 10 of the present disclosure, specifically, the all-solid-state battery element is covered with the process film 10 by heat-sealing the heat-sealable resin layers at the peripheral edge portion of the process film 10 to each other with the all-solid-state battery element disposed inside the process film 10. The heat-sealing conditions are not particularly limited as long as the heat-sealable resin layers are heat-sealed to each other, and heat sealing may be performed, for example, at a temperature of about 160 to 240°C, a surface pressure of about 0.1 to 2 MPa and a time of about 0.5 to 10 seconds.

When the all-solid-state battery element is housed in the process film 10, the packaging is formed in such a manner that the heat-sealable resin portion of the process film 10 of the is on the inner side (a surface contacting the all-solid-state battery element). The heat-sealable resin layers of two process films 10 may be superposed in such a manner as to face each other, followed by heat-sealing the peripheral edge portions of the superposed process films to form a packaging, or one process film 10 may be folded over itself, followed by heat-sealing the peripheral edge portions to form a packaging. When the exterior material is folded over itself, a packaging may be formed by three-side sealing with the exterior material heat-sealed at sides other than the folding side, or may be subjected to four-side sealing with the exterior material folded in such a manner that a flange portion can be formed. In the process film 10, a concave portion for housing an all-solid-state battery element may be formed by deep drawing molding or bulging molding. One process film 10 may be provided with a concave portion while the other process film 10 is not provided with a concave portion, or the other process film 10 may also be provided with a concave portion. The process film 10 which has not been molded may be used for covering the all-solid-state battery element.

Next, the step of pressurizing an all-solid-state battery element with the all-solid-state battery element covered with a process film is carried out. As described above, here, the all-solid-state battery element may be covered with the process film 10 with the terminals 60 being inside the peripheral edge portion of the process film 10 in their entirety (see Fig. 9), or the all-solid-state battery element may be covered with the process film 10 with the terminals 60 protruding outside the peripheral edge portion (see Figs. 10 and 11). When the peripheries of the heat-sealable resin layers 4 at the peripheral edge portion of the process film 10 are heat-sealed in their entirety, the all-solid-state battery element is hermetically sealed (see Figs. 9 and 10). Conditions regarding pressure, temperature and the like in pressurization of the all-solid-state battery element are as described in the pressurization step.

Figs. 9 to 11 are schematic plan views showing a state in which the all-solid-state battery element is covered with the process film 10 without molding the process film 10. It is preferable that as shown in Figs. 9 to 11, an adhesive film 61 is disposed on the terminal 60 for enhancing adhesion between the terminal 60 and an all-solid-state battery packaging material for sealing an all-solid-state battery element after the process film 10 is peeled. Fig. 9 shows a state in which the terminals 60 and the adhesive film 61 of the all-solid-state battery element are all sealed in a packaging formed of the process film 10. In Fig. 9, the entirety of each of the terminals 60 is hermetically sealed inside the heat-sealed portion S formed by heat-sealing the peripheral edge portions of the process film 10. In Figs. 10 and 11, the process film 10 is heat-sealed from above the terminal 60 in a state in which the lead end part of each of the terminals 60 of the all-solid-state battery element protrudes from the packaging. In Fig. 10, the adhesive film 61 is present inside the heat-sealed portion S at the peripheral edge portion of the process film 10, and the packaging is hermetically sealed without heat-sealing the adhesive film 61. On the other hand, Fig. 11 shows a state in which the adhesive film 61 is located in the peripheral edge portion of the process film 10, and the heat-sealed portion S is provided in the peripheral edge portion of the process film 10 in such a manner as to avoid the adhesive film 61. In the aspect of Fig. 11, the packaging is not hermetically sealed. From the viewpoint of more suitably suppressing ingress of moisture into the packaging, it is preferable that the terminals 60 of the all-solid-state battery element and the adhesive film 61 are sealed in their entirety in the package formed of the process film 10 as shown in Fig. 9. When the heat-sealed portion S is formed on the terminal 60 as shown in Figs. 10 and 11, delamination can be facilitated by triggering delamination after pressurization because adhesion between the terminal 60 and the process film 10 is low.

The step of peeling the process film from the all-solid-state battery element is carried out. In peeling of the process film 10 from the all-solid-state battery element, for example, the process film 10 may be cut along a dotted-dashed line C inside the heat-sealed portion S so as not to damage the all-solid-state battery element as in the schematic views of Fig. 9 to 11. As described above, the thickness of the water vapor barrier layer 3 is particularly preferably about 20 µm or less, about 10 µm or less, about 5 to 20 µm, or about 5 to 10 µm, from the viewpoint of enhancing the separability of the process film 10 after heating.

### EXAMPLES

Hereinafter, the present disclosure will be described in detail by way of examples and comparative examples. However, the present disclosure is not limited to examples.

### <Manufacture of process film>

### [Example 1]

A polyethylene terephthalate (PET) film (thickness: 12 µm and melting point: 260°C) as a base material layer, and an unstretched polypropylene film (CPP, melting point: 160°C) film (thickness: 60 µm) containing a moisture adsorbing material as a heat-sealable resin layer were provided. The unstretched polypropylene (CPP) film contains calcium oxide as a moisture adsorbing material at 30 mass%. Next, a polyethylene terephthalate (PET) film and an unstretched polypropylene film (CPP containing a moisture adsorbing material) were bonded to each other by a dry lamination method using a two-liquid curable urethane adhesive. Next, the obtained laminate was aged and heated to obtain a process film in which a base material layer (PET), an adhesive layer (DL) and a heat-sealable resin layer (CPP containing a moisture adsorbing material) were laminated in this order.

### [Example 2]

A polyethylene terephthalate (PET) film (thickness: 12 µm and melting point: 260°C) as a base material layer, and an unstretched polypropylene film (thickness: 60 µm and melting point: 160°C) as a heat-sealable resin layer were provided. An aluminum alloy foil (JIS H4160: 1994 A8021 H-O, ALM having a thickness of 7 µm) was provided as a water vapor barrier layer. Using a two-liquid curable urethane adhesive, the base material layer and the water vapor barrier layer were bonded to each other by a dry lamination method to produce a laminate of a base material layer, an adhesive agent layer and a water vapor barrier layer. Next, using a two-liquid curable urethane adhesive, the obtained laminate on the water vapor barrier layer side and the heat-sealable resin layer were bonded to each other by a dry lamination method to laminate an adhesive layer and a heat-sealable resin layer on the water vapor barrier layer. Next, the obtained laminate was aged, and heated to obtain a process film including a laminate in which a base material layer (PET), an adhesive agent layer (DL), a water vapor barrier layer (ALM), an adhesive layer (DL) and a heat-sealable resin layer (CPP) were laminated in this order.

### [Example 3]

A polyethylene terephthalate (PET) film (thickness: 12 µm and melting point: 160°C) having a transparent gas barrier layer (a SiOx thin film having a thickness of 20 nm) formed on a surface thereof for imparting barrier properties and a stretched nylon (ONy) film (thickness: 15 µm and melting point: 255°C) were disposed with the silica thin film facing the stretched nylon, and the polyethylene terephthalate film and the stretched nylon film were bonded to each other with a two-liquid curable urethane adhesive (thickness after curing: 3 µm) to provide a laminated film as a base material layer. As a heat-sealable resin layer, an unstretched polypropylene film (thickness: 40 µm) was provided. Next, the stretched nylon film of the base material layer and the unstretched polypropylene film were bonded to each other with a two-liquid curable urethane adhesive (thickness after curing: 3 µm) to obtain a process film in which a base material layer (PET/transparent barrier (silica thin film)/ONy), an adhesive layer (DL) and a heat-sealable resin layer (CPP) were laminated in this order.

### [Example 4]

A polyethylene terephthalate (PET) film (thickness: 12 µm and melting point: 260°C) as a base material layer, and an unstretched polypropylene (CPP) film (thickness: 60 µm and melting point: 160°C) as a heat-sealable resin layer were provided. Next, a polyethylene terephthalate (PET) film and an unstretched polypropylene (CPP) were bonded to each other with a two-liquid curable urethane adhesive (thickness after curing: 3 µm) to obtain a process film in which a base material layer (PET), an adhesive layer (DL) and a heat-sealable resin layer (CPP) were laminated in this order.

### [Example 5]

A polyethylene terephthalate (PET) film (thickness: 12 µm and melting point: 260°C) as a base material layer, and an unstretched polypropylene film (CPP having a thickness of 60 µm and a melting point of 160°C and containing a moisture adsorbing material (calcium oxide) at 30 mass%) as a heat-sealable resin layer were provided. An aluminum alloy foil (JIS H4160: 1994 A8021 H-O, ALM having a thickness of 7 µm) was provided as a water vapor barrier layer. Using a two-liquid curable urethane adhesive, the base material layer and the water vapor barrier layer were bonded to each other by a dry lamination method to produce a laminate of a base material layer, an adhesive agent layer and a water vapor barrier layer. Next, using a two-liquid curable urethane adhesive, the obtained laminate on the water vapor barrier layer side and the heat-sealable resin layer were bonded to each other by a dry lamination method to laminate an adhesive layer and a heat-sealable resin layer on the water vapor barrier layer. Next, the obtained laminate was aged, and heated to obtain a process film including a laminate in which a base material layer (PET), an adhesive agent layer (DL), a water vapor barrier layer (ALM), an adhesive layer (DL) and a heat-sealable resin layer (CPP containing a moisture adsorbing material) were laminated in this order.

### [Example 6]

A polyethylene terephthalate (PET) film (thickness: 12 µm and melting point: 260°C) as a base material layer, and an unstretched polypropylene film (thickness: 40 µm and melting point: 160°C) as a heat-sealable resin layer were provided. An aluminum alloy foil (JIS H4160: 1994 A8021 H-O, ALM having a thickness of 40 µm) was provided as a water vapor barrier layer. Using a two-liquid curable urethane adhesive, the base material layer and the water vapor barrier layer were bonded to each other by a dry lamination method to produce a laminate of a base material layer, an adhesive agent layer and a water vapor barrier layer. Next, using a two-liquid curable urethane adhesive, the obtained laminate on the water vapor barrier layer side and the heat-sealable resin layer were bonded to each other by a dry lamination method to laminate an adhesive layer and a heat-sealable resin layer on the water vapor barrier layer. Next, the obtained laminate was aged, and heated to obtain a process film including a laminate in which a base material layer (PET), an adhesive agent layer (DL), a water vapor barrier layer (ALM), an adhesive layer (DL) and a heat-sealable resin layer (CPP) were laminated in this order.

### [Comparative Example 1]

A polyethylene terephthalate (PET) film (thickness: 12 µm and melting temperature: 260°C) was used as a process film.

### <Pressure resistance test>

As shown in the schematic diagram of Fig. 12, one process film 10 (having a rectangular shape having a length of 30 mm and a width of 30 mm) provided in each of examples and the comparative example, one nonwoven fabric 71 (having a rectangular shape having a length of 30 mm, a width of 30 mm and a thickness of 2 mm), and one stainless steel sheet 72 (having a rectangular shape having a length of 25 mm, a width of 25 mm and a thickness of 5 mm) disposed as if it were an all-solid-state battery element were sandwiched between two stainless steel sheets 70 (each having a rectangular shape having a length of 50 mm, a width of 70 mm and a thickness of 10 mm), pressurized at a pressure of 100 MPa for 300 minutes in an environment at 25°C, and fixed with a bolt to maintain the pressure. Here, the two stainless steel sheets 70, the stainless steel sheet 72 disposed as if it were an all-solid-state battery element, the nonwoven fabric 71 and the process film 10 were matched in terms of the center, the length direction and the width direction. The nonwoven fabric 71 was disposed on the base material layer side of the process film 10. For the process films of examples, the heat-sealable resin layer was on the 5 mm-thick stainless steel sheet 72 side. Cutting was performed in the thickness direction at the position of the center of the process film after pressurization, the obtained cross-section was observed with a laser microscope VK-9500 (manufactured by KEYENCE CORPORATION), and pressure resistance was evaluated on the basis of the following criteria. The results are shown in Table 1.

A: Breakage such as breakage is not observed in any of the layers of the process film.

C: Breakage such as breakage is observed in any of the layers of the process film.

### <Heat and pressure resistance test>

A heat and pressure resistance test was conducted in the same manner as in the above-described pressure resistance test except that the pressure resistance test was conducted in an environment at 150°C. The evaluation criteria are as follows. The results are shown in Table 1.

A: Breakage such as breakage is not observed in any of the layers of the process film.

C: Breakage such as breakage is observed in any of the layers of the process film.

### <Water-vapor transmission rate>

For the process film provided in each of examples and the comparative example, the water-vapor transmission rate (cc/m²/day) is measured under the condition of 40°C and 100% RH using MOCON PERMATRAN-W 3/33 manufactured by MOCON, Inc. in accordance with the provision of JIS K 7129: 2008 (Annex B) (measurement conditions such as a test sample size and a measurement time are the same as those in the provision). For a process member containing an absorbing material, the measurement was performed for a time identical to a time set for a material which has the same material and the same thickness and is free of an absorbing material. The results are shown in Table 1.

### <Water absorbency>

A PET film (having a rectangular shape having a length of 80 mm, a width 80 mm and a thickness of 0.15 mm) was disposed between two process films (each having a rectangular shape having a length of 120 mm and a width of 120 mm) provided in each of examples and the comparative example. Here, for the process films of examples, the heat-sealable resin layers faced each other. The process film and the PET film were left standing in a dry room at a dew point of minus 30 degrees for 48 hours to be dried in advance. Next, the peripheral edge of the process film was heat-sealed by 10 mm in width, and the PET film was sealed in such a manner that the area of the portion which was not heat-sealed was 10,000 mm², thereby obtaining a test sample. In the process film of Comparative Example 1, it was not possible to heat-seal the PET film, and therefore a test sample was used in which the PET film was sandwiched between two process films. Next, each test sample was left standing in an environment at 25°C and 55% RH for 48 hours. The PET film was taken out from the test sample, and the amount of moisture in the PET film after the test was determined with CA-200 (desktop-type coulometric moisture meter) and VA-236S (automatic moisture vaporizer), manufacturer: Mitsubishi Analytech Co., Ltd.), and water absorbency was evaluated by comparison with the amount of moisture in the PET film before the test. The evaluation criteria are as follows. The moisture content of the PET film before evaluation was about 150 ppm. The results are shown in Table 1.
A: The moisture content in the PET film decreased by 20 ppm or more after the test.
B: The moisture content in the PET film increased or decreased by less than 20 ppm after the test.
C: The moisture content in the PET film increased by 20 ppm or more and 100 ppm or less after the test.
D: The moisture content in the PET film increased by more than 100 ppm after the test.

### <Sticking of falling object to electrode due to pressurization of all-solid-state battery element, etc.>

One solid electrolyte pellet (having a composition of Li₂S:P₂S₅ = 75: 25 (mass ratio) and having a rectangular shape having a length of 20 mm, a width of 20 mm and a thickness of 1 mm) for forming the solid electrolyte layer of the all-solid-state battery was provided. As shown in the schematic diagram of Fig. 13, a SUS foil having a length of 35 mm, a width of 21 mm and a thickness of 0.02 mm was attached as a simulated electrode to each of the upper and lower parts of the solid electrolyte pellet. Two process films (each having a length of 45 mm and a width of 45 mm) provided in each of examples and the comparative example were provided. The SUS foil/solid electrolyte pellet/SUS foil was sandwiched vertically in such a manner that the heat-sealable resin layers of the two process films faced each other, and the peripheral edge portions of the process films were heat-sealed to seal the solid electrolyte pellet in a vacuum environment. Here, the electrode attached to the solid electrolyte pellet protruded outward from the peripheral edge portion of the process film. Next, in an environment at 25°C, the solid electrolyte pellet sealed with the process film was pressurized twice at a pressure of 10 t/cm² and a rate of 1 m/min using a pressurizing apparatus (SA-602 small desktop-type roll press) that performs roll pressing. The pressure was released, and whether or not a falling object from the solid electrolyte pellet stuck to the electrode surface or a depression was formed by the stuck material was confirmed. The evaluation criteria are as follows. The results are shown in Table 1. The process film of Comparative Example 1 is a PET film, and therefore cannot be heat-sealed. Thus, pressurization was performed with the solid electrolyte pellet sandwiched between two process films. For reference, the all-solid-state battery element was pressurized without using the process film, and the result showed that a falling object from the solid electrolyte was stuck on the electrode, and there was a depression formed by pressing the stuck material on the electrode surface against the electrode during re-pressurization.

A: Sticking to the electrode surface does not occur, or a depression is not formed by the stuck material.

C: Sticking to the electrode surface occurs, or a depression is formed by the stuck material.

### <Sticking of falling object to pressurizing apparatus due to pressurization of all-solid-state battery element>

One solid electrolyte pellet (having a composition of Li₂S:P₂S₅ = 75: 25 (mass ratio) and having a rectangular shape having a length of 20 mm, a width of 20 mm and a thickness of 1 mm) for forming the solid electrolyte layer of the all-solid-state battery was provided. As shown in the schematic diagram of Fig. 13, a SUS foil 80 having a length of 35 mm, a width of 21 mm and a thickness of 0.02 mm was attached as a simulated electrode to each of the upper and lower parts of a solid electrolyte pellet 81. Two process films 10 (each having a length of 45 mm and a width of 45 mm) provided in each of examples and the comparative example were provided. The SUS foil/solid electrolyte pellet/SUS foil was sandwiched vertically in such a manner that the heat-sealable resin layers of the two process films 10 faced each other, and the peripheral edge portions of the process films were heat-sealed to seal the solid electrolyte pellet in a vacuum environment. Here, the electrode attached to the solid electrolyte pellet protruded outward from the peripheral edge portion of the process film. Next, in an environment at 25°C, the solid electrolyte pellet sealed with the process film was pressurized twice at a pressure of 10 t/cm² and a rate of 1 m/min using a pressurizing apparatus (SA-602 small desktop-type roll press) that performs roll pressing. The pressure was released, and whether or not a falling object from the solid electrolyte pellet was stuck on the pressurizing apparatus was confirmed. The evaluation criteria are as follows. The results are shown in Table 1. The process film of Comparative Example 1 is a PET film, and therefore cannot be heat-sealed. Thus, pressurization was performed with the solid electrolyte pellet sandwiched between two process films. For reference, the all-solid-state battery element was pressurized without using the process film, and the result showed that a falling object from the solid electrolyte was stuck on the pressurizing apparatus.

A: A falling object from the solid electrolyte is not stuck on the pressurizing apparatus.

C: A falling object from the solid electrolyte is stuck on the pressurizing apparatus.

### <Ease of peeling of process film after pressurization>

One nonwoven fabric (having a rectangular shape having a length of 30 mm, a width of 30 mm and a thickness of 2 mm), one process film (having a rectangular shape having a length of 30 mm and a width of 30 mm) provided in each of examples and the comparative example, and one stainless steel sheet (having a rectangular shape having a length of 20 mm, a width of 20 mm and a thickness of 5 mm) disposed as if it were an all-solid-state battery element were sandwiched between two stainless steel sheets (each having a rectangular shape having a length of 50 mm, a width of 70 mm and a thickness of 10 mm), and pressurized at a pressure of 100 MPa for 300 minutes. Here, the stainless steel sheets and the process film were matched in terms of the center, the length direction and the width direction. The nonwoven fabric was disposed on the base material layer side of the process film 10. For the process films of examples, the heat-sealable resin layer was on the 5 mm-thick stainless steel sheet side. Next, the process film was peeled from the 5 mm-thick stainless steel sheet, and the ease of peeling was evaluated on the basis of the following criteria. The results are shown in Table 1.

A: The process film is not heavily caught in the corner of the stainless steel sheet, and can be easily peeled.

C: The process film is heavily caught in the corner of the stainless steel sheet, and cannot be easily peeled.

**[Table 1]**

| | Process film | | | | | | | | |
|---|---|---|---|---|---|---|---|---|---|
| | Laminated configuration Numerical value in parenthesis is thickness (µm) | Presence/absence of moisture adsorbing material in heat-sealable resin layer | Pressure resistance test | Heat and pressure resistance test | Water-vapor transmission rate (cc/m²/day) | Water absorbency | Sticking of falling object due to pressurization of all-solid-state battery element | | Ease of peeling after pressurization |
| | | | | | | | Electrode | Pressurizing apparatus | |
| Example 1 | PET(12)/CPP(60) | Presence | A | A | 0.0 | A | A | A | A |
| Example 2 | PET(12)/DL(3)/ALM(7)/DL(3)/CPP(60) | Absence | A | A | 0.0 | B | A | A | A |
| Example 3 | PET(12)/gas barrier layer/DL(3)/ONy(15)/CPP(40) | Absence | A | A | 1.6 | C | A | A | A |
| Example 4 | PET(12)/CPP(60) | Absence | A | A | 5.0 | C | A | A | A |
| Example 5 | PET(12)/DL(3)/ALM(7)/DL(3)/CPP(60) | Presence | A | A | 00 | A | A | A | A |
| Example 6 | PET(12)/DL(3)/ALM(40)/DL(3)/CPP(40) | Absence | A | A | 00 | B | A | A | C |
| Comparative Example 1 | PET(12) | - | A | A | 16.0 | D | C | C | A |

As described above, the present disclosure provides inventions of aspects as described below.

Item 1. A process film for use in a step of pressurizing an all solid-state battery element in manufacture of an all-solid-state battery,
the process film being used for an application in which the all-solid-state battery element is pressurized with the all-solid-state battery element covered with the process film, and the process film is then peeled from the all-solid-state battery element,
the process film including a laminate including at least a base material layer and a heat-sealable resin layer in this order from the outside.

Item 2. The process film according to item 1, in which a melting point of the heat-sealable resin layer is 140°C or higher and 240°C or lower.

Item 3. The process film according to item 1 or 2, in which the heat-sealable resin layer has a polyolefin backbone.

Item 4. The process film according to any one of items 1 to 3, in which a melting point of the base material layer is 200°C or higher.

Item 5. The process film according to any one of items 1 to 4, including a buffer layer.

Item 6. The process film according to any one of items 1 to 5, including a water vapor barrier layer.

Item 7. The process film according to any one of items 1 to 6, in which a water-vapor transmission rate of the process film left standing in an environment at 40°C and 100% RH for 48 hours is 10cc/m²/day or less.

Item 8. The process film according to any one of items 1 to 7, in which the heat-sealable resin layer contains a moisture adsorbing material.

Item 9. The process film according to any one of items 1 to 8, in which the heat-sealable resin layer contains a hydrogen sulfide absorbing material.

Item 10. A method for manufacturing an all-solid-state battery, the method including the steps of:
pressurizing an all-solid-state battery element with the all-solid-state battery element covered with a process film;
peeling the process film from the all-solid-state battery element; and
sealing the all-solid-state battery element with a packaging material,
the process film including a laminate including at least a base material layer and a heat-sealable resin layer in this order from the outside.

### DESCRIPTION OF REFERENCE SIGNS

1: Base material layer
2: Adhesive agent layer
3: Water vapor barrier layer
4: Heat-sealable resin layer
5: Adhesive layer
6: Buffer layer
10: Process film
20: Negative electrode layer
21: Negative active material layer
22: Negative electrode current collector
30: Positive electrode layer
31: Positive active material layer
32: Positive electrode current collector
40: Solid electrolyte layer
50: Unit cell
60: Terminal
61: Adhesive film

## Claims

1. A process film for use in a step of pressurizing an all solid-state battery element in manufacture of an all-solid-state battery,
the process film being used for an application in which the all-solid-state battery element is pressurized with the all-solid-state battery element covered with the process film, and the process film is then peeled from the all-solid-state battery element,
the process film comprising a laminate including at least a base material layer and a heat-sealable resin layer in this order from the outside.

2. The process film according to claim 1, wherein a melting point of the heat-sealable resin layer is 140°C or higher and 240°C or lower.

3. The process film according to claim 1 or 2, wherein the heat-sealable resin layer has a polyolefin backbone.

4. The process film according to any one of claims 1 to 3, wherein a melting point of the base material layer is 200°C or higher.

5. The process film according to any one of claims 1 to 4, comprising a buffer layer.

6. The process film according to any one of claims 1 to 5, comprising a water vapor barrier layer.

7. The process film according to any one of claims 1 to 6, wherein a water-vapor transmission rate of the process film left standing in an environment at 40°C and 100% RH for 48 hours is 10cc/m²/day or less.

8. The process film according to any one of claims 1 to 7, wherein the heat-sealable resin layer contains a moisture adsorbing material.

9. The process film according to any one of claims 1 to 8, in which the heat-sealable resin layer contains a hydrogen sulfide absorbing material.

10. A method for manufacturing an all-solid-state battery, the method comprising the steps of:
pressurizing an all-solid-state battery element with the all-solid-state battery element covered with a process film;
peeling the process film from the all-solid-state battery element; and
sealing the all-solid-state battery element with a packaging material,
the process film including a laminate including at least a base material layer and a heat-sealable resin layer in this order from the outside.
